# EUROPEAN PATENT SPECIFICATION

(11) **EP 1 479 647 B1**
(45) Date of publication and mention of the grant of the patent: **25.02.2009**
(21) Application number: 04405318.9
(22) Date of filing: 21.05.2004
(51) Int. Cl.: B81B 7/02, B81B 7/04, G02B 26/08, G02B 6/35, B81B 7/00

(54) **Electrical cross-talk shield for MEMs micromirrors**
Elektrische Übersprechungsabschirmung für MEMS Mikrospiegel
Blindage électrique à faible diaphonie pour MEMS micro-miroirs

(30) Priority: 23.05.2003 CA 2429508; 27.05.2003 US 445360; 18.06.2003 US 479222 P; 22.09.2003 US 504210 P
(43) Date of publication of application: 24.11.2004
(73) Proprietor: JDS Uniphase Inc., Ottawa, Ontario K2G 6N7 (CA)
(72) Inventor: Miller, John Michael, Quebec, J9H 6Y2 (CA); Ma, Yuan, Ontario, K2G 6T7 (CA); Keyworth, Barrie, Ontario, K2S 1M2 (CA); Mala, Mohiuddin, Ontario, K2M 2L5 (CA); McKinnon, Graham, Alberta, T6C 3A6 (CA)
(74) Representative: Frei, Alexandra Sarah

(56) References cited:
- WO-A-01/61400
- WO-A-01/73934
- US-A1- 2002 097 952
- US-A1- 2003 012 486
- US-B1- 6 442 307
- US-B2- 6 533 947

## Description

### CROSS-REFERENCE TO RELATED APPLICATIONS

The present invention is a continuation-in-part of United States Patent Application No. 10/445,360, which claims priority from United States Patent Application No. 60/383,106 filed May 28, 2002. The present invention also claims priority from United States Patent Applications Nos. 60/479,222 filed June 18, 2003 and 60/504,210 filed September 22, 2003.

### TECHNICAL FIELD

The present invention relates to a micro-electro-mechanical (MEMs) device including an array of tilting platforms actuated by electrodes, and in particular to a MEMs mirror array with shielding to prevent electrical cross-talk between mirrors.

### BACKGROUND OF THE INVENTION

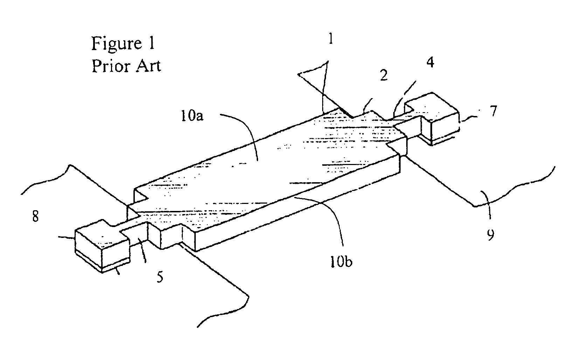

Conventional MEMs mirrors for use in optical switches, such as the one disclosed in United States Patent No. 6,535,319 issued March 18, 2003 to Buzzetta et al, redirect beams of light to one of a plurality of output ports, and include an electro-statically controlled mirror pivotable about a single axis. Tilting MEMs mirrors, such as the ones disclosed in United States Patent No 6,491,404 issued December 10, 2002 in the name of Edward Hill, and United States Patent Publication No. 2003/0052569, published March 20, 2003 in the name of Dhuler et al. comprise a mirror pivotable about a central longitudinal axis. The MEMs mirror device 1, disclosed in the aforementioned Hill patent, is illustrated in Figure 1, and includes a rectangular planar surface 2 pivotally mounted by torsional hinges 4 and 5 to anchor posts 7 and 8, respectively, above a substrate 9. The torsional hinges may take the form of serpentine hinges, which are disclosed in United States Patent No 6,327,855 issued December 11, 2001 in the name of Hill et al, and in United States Patent Publication No. 2002/0126455 published September 12, 2002 in the name of Robert Wood. In order to position conventional MEMs mirror devices in close proximity, i.e. with a high fill factor (fill factor=width/pitch), they must be positioned with their axes of rotation parallel to each other. Unfortunately, this mirror construction restraint greatly restricts other design choices that have to be made in building the overall switch.

When using a conventional MEMs arrangement, the mirror 1 positioned on the planar surface 2 can be rotated through positive and negative angles, e.g. ± 2°, by attracting one side 10a or the other side 10b of the planar surface 2 towards the substrate 9. Unfortunately, when the device is switched between ports at the extremes of the devices rotational path, the intermediate ports receive light for fractions of a millisecond as the mirror 1 sweeps the optical beam past these ports, thereby causing undesirable optical transient or dynamic cross-talk.

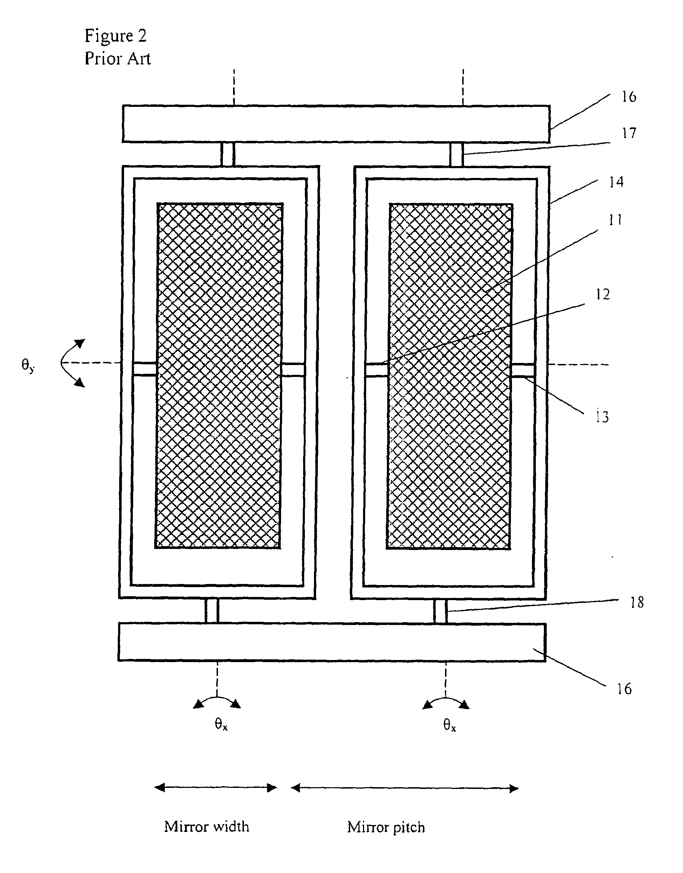

One solution to the problem of dynamic cross-talk is to initially or simultaneously rotate the mirror about a second axis, thereby avoiding the intermediate ports. An example of a MEMs mirror device pivotable about two axes is illustrated in Figure 2, and includes a mirror platform 11 pivotally mounted by a first pair of torsion springs 12 and 13 to an external gimbal ring 14, which is in turn pivotally mounted to a substrate 16 by a second pair of torsion springs 17 and 18. Examples of external gimbal devices are disclosed in United States Patents Nos. 6,529,652 issued March 4, 2003 to Brenner, and 6,454,421 issued September 24, 2002 to Yu et al. Unfortunately, an external gimbal ring greatly limits the number of mirrors that can be arranged in a given area and the relative proximity thereof, i.e. the fill factor. Moreover, the external gimbal ring may cause unwanted reflections from light reflecting off the support frame 13, 14.

Another proposed solution to the problem uses high fill factor mirrors, such as the ones disclosed in United States Patent No. 6,533,947 issued March 18, 2003 to Nasiri et al, which include hinges hidden beneath the mirror platform. Unfortunately, these types of mirror devices require costly multi-step fabrication processes, which increase costs and result in low yields.

The solution to overcome the shortcomings of the prior art proposed by the inventors of the parent application listed above is to provide a high fill factor MEMs mirror device that can pivot about the same axis as an adjacent mirror. In a preferred embodiment the MEMs mirror device is relatively easy to fabricate, with an internal gimbal ring and applicable in high fill factor applications.

Typically MEMs devices are independently actuated by an electrode mounted on the substrate below the tilting platform for inducing a voltage-controlled rotation via an electrostatic torque. An unfortunate consequence of closely packed tilting platforms is that the actuation of a single platform by a primary electrode results in electric fringing fields, which will cause a torque and a resultant angular rotation on adjacent platforms.

An object of the present invention is to overcome the shortcomings of the prior art by providing a MEMs device, which is actuated by a primary electrode, with electrical cross-talk shielding to prevent the unwanted actuation of adjacent devices by electric fringing fields from the primary electrode.

### SUMMARY OF THE INVENTION

Accordingly, the present invention relates to A micro-electro-mechanical device mounted on a substrate comprising:
a first pivoting member pivotally mounted above the substrate;
a second pivoting member pivotally mounted above the substrate adjacent the first pivoting member;
a first electrode for actuating the first pivoting member;
a second electrode positioned proximate the first electrode for actuating the second pivoting member; and
a first shield positioned between the first and second electrodes for shielding the first pivoting member from fringing electric fields from the second electrode.

### BRIEF DESCRIPTION OF THE DRAWINGS

The invention will be described in greater detail with reference to the accompanying drawings which represent preferred embodiments thereof, wherein:

Figure 1 is an isometric view of a conventional tilting MEMs mirror device;

Figure 2 is a plan view of a pair of conventional external gimbal ring MEMs mirror devices;

Figure 3 is an isometric view of a plurality of Piano-MEMs mirror devices according to the present invention;

Figure 4 is an isometric view of a hinge structure of the mirror devices of Fig. 3;

Figure 5 is an isometric view of a plurality of Piano-MEMs mirror devices without shielding;

Figure 6 is an end view of the mirror devices of Figure 5;

Figure 7 is an isometric view of a plurality of Piano-MEMs mirror devices with electrodes according to the present invention with substrate shielding;

Figure 8 is an end view of the mirror devices of Fig. 7;

Figure 9 is an isometric view of an alternative electrode structure of the mirror devices of Figs. 3 and 4;

Figure 10 is an isometric view of a plurality of Piano-MEMs mirror devices with electrodes according to the present invention with substrate and platform shielding;

Figure 11 is an end view of the mirror devices of Fig. 10;

Figure 12 is an end view of an alternative embodiment of the mirror devices of Fig. 10;

Figure 13 is an isometric view of an internal gimbal ring MEMs mirror device according to the present invention;

Figure 14 is an isometric view of a hinge structure of the mirror devices of Fig. 13;

Figure 15 is an isometric view of an electrode structure of the mirror devices of Figs. 13 and 14;

Figure 16 is an end view of the internal gimbal ring MEMs mirror device of Figs 13 and 14;

Figure 17 is a graph of Voltage vs Time provided by the electrode structure of Figure 15 and 16;

Figure 18 is a schematic diagram of a wavelength switch utilizing the mirror devices of the present invention;

Figure 19 is a schematic diagram of the input/output assembly for the wavelength switch of Fig. 18; and

Figure 20 is a schematic diagram of an alternative embodiment of an input assembly for the wavelength switch of Fig. 18.

### DETAILED DESCRIPTION

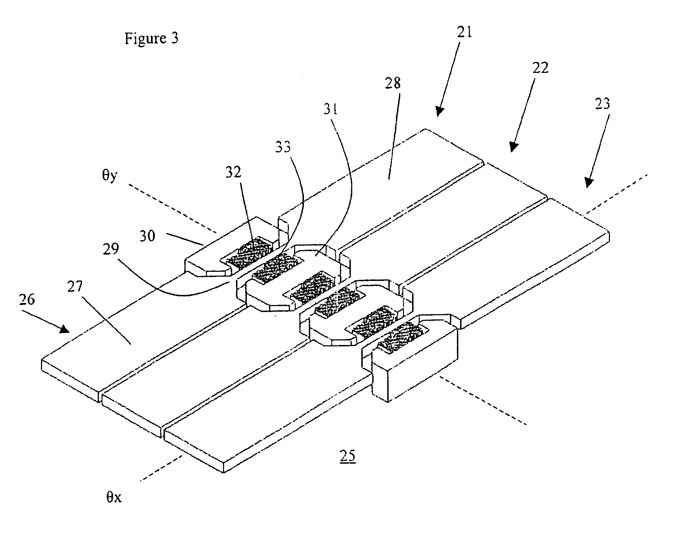

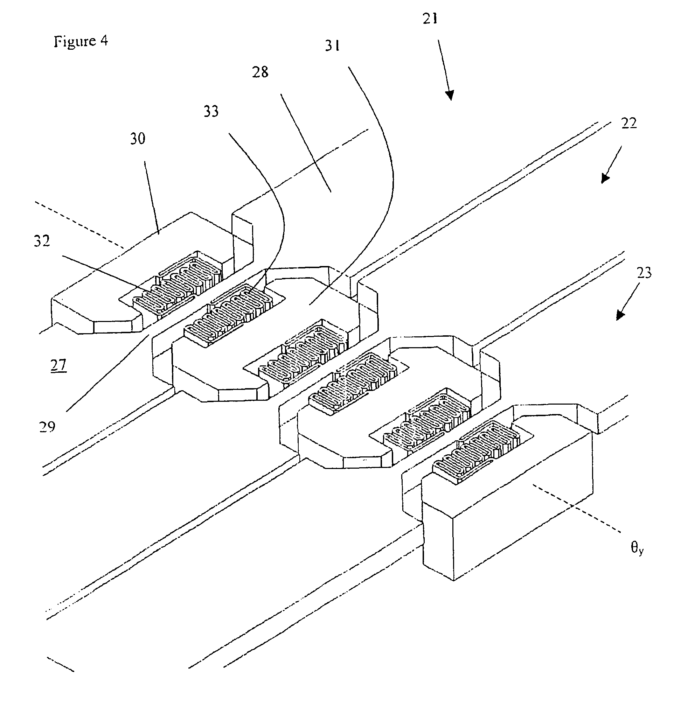

In accordance with the present invention an array of "Piano" MEMs mirror devices 21, 22 and 23, which pivot about a single axis of rotation θ_{y} above a substrate 25, is illustrated in Figures 3 and 4. Each mirror device 21, 22 and 23 includes a pivoting platform 26 defined by first and second substantially-rectangular planar supporting regions 27 and 28 joined by a relatively-thin substantially-rectangular brace 29 extending therebetween. Typically, each planar supporting region 27, 28 is coated with a reflective coating, e.g. gold, for simultaneously reflecting a pair of sub-beams of light traveling along parallel paths, as will be hereinafter discussed. Each brace 29 acts like a lever and is pivotally mounted on C or I-shaped anchor posts 30 and 31 via first and second torsional hinges 32 and 33, respectively. The anchor posts 30 and 31 extend upwardly from the substrate 25. The ends of the first torsional hinge 32 are connected to the anchor post 30 and the brace 29 along the axis θ_{y}. Similarly, the ends of the second torsional hinge 33 are connected to the anchor post 31 and the brace 29 along the axis θ_{y}. Preferably, each of the first and second torsional hinges 32 and 33 comprises a serpentine hinge, which are considerably more robust than conventional torsional beam hinges. The serpentine hinge is effectively longer than a normal torsional hinge, which spans the same distance, thereby providing greater deflection and strength, without requiring the space that would be needed to extend a normal full-length torsional hinge.

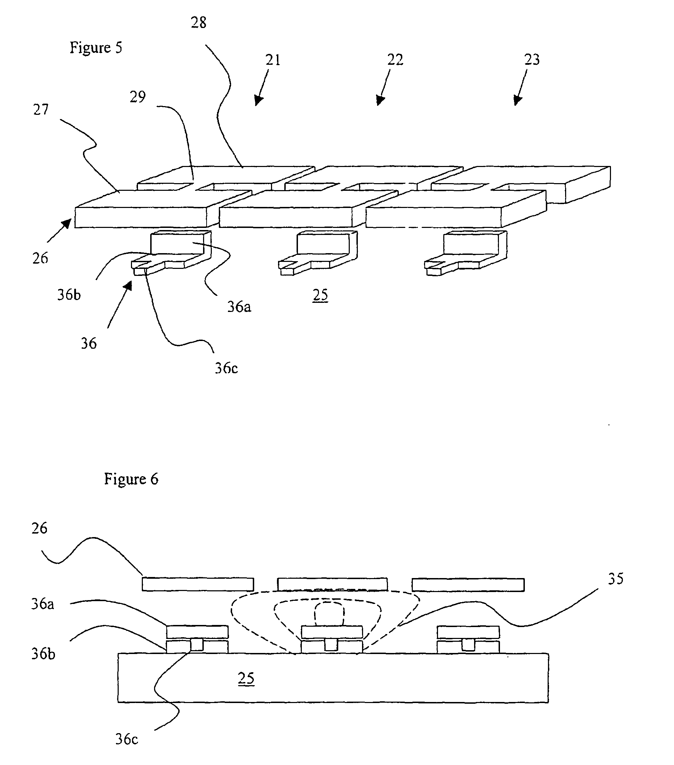

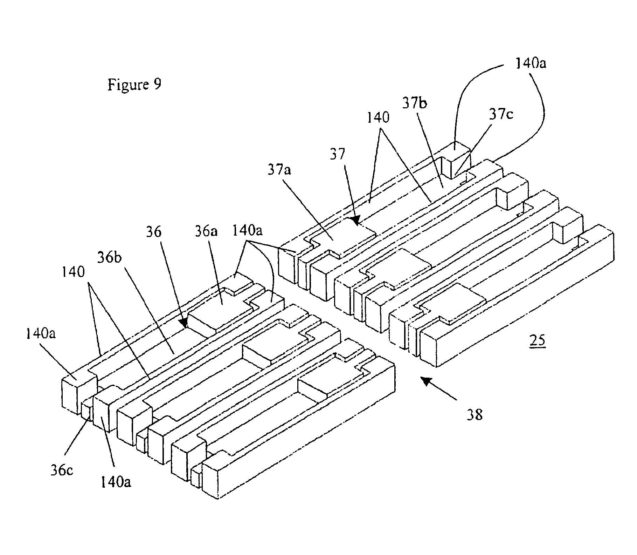

With particular reference to Figures 5 and 6, each platform 26 is rotated by the selective activation of a first electrode 36, which electro-statically attracts the first planar section 27 thereto or by the selective activation of a second electrode 37 (see Figure 9), which electro-statically attracts the second planar section 28 thereto. A gap 38, illustrated in Figure 9, is provided between the first and second electrodes 36 and 37 for receiving the anchor posts 31, which extend from the substrate 25 to adjacent the platforms 26.

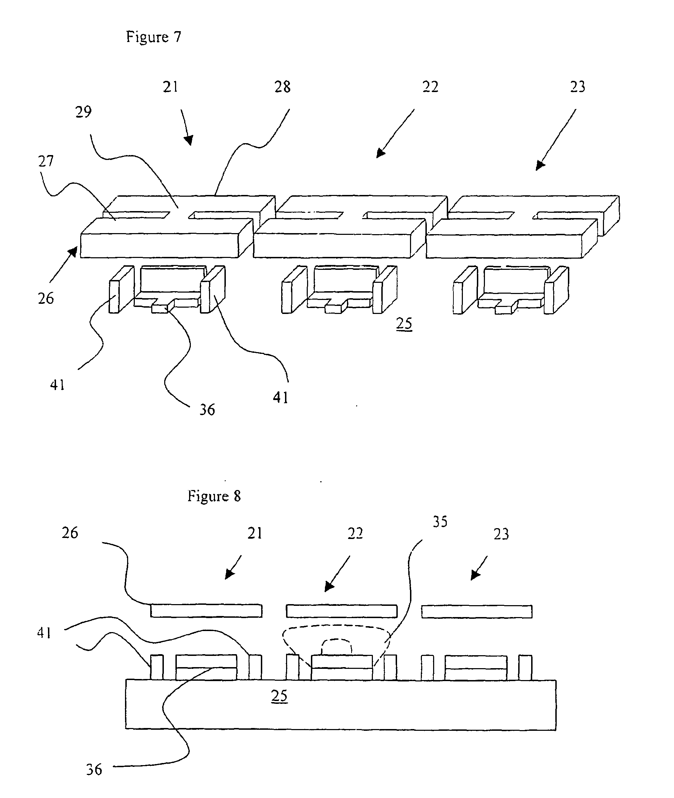

A consequence of closely packed micro-mirrors is that the actuation of a single mirror will impart a torque, i.e. an angular rotation, onto adjacent mirrors as a result of fringing electric fields 35. In an effort to minimize this electrical cross-talk, electrode grounding shields 41, see Figures 7, 8 and 9, are positioned on the substrate 25 on either side of the first and second electrodes 36 and 37 forming electrode cavities, which are electrically isolated from each other. The electrode grounding shields 41 extend the length of the first and second electrodes 36 and 37, perpendicular to the axis of rotation θ_{y} of the platforms 26, defined by the gap 38. The walls of the electrode grounding shields 41 extend upwardly above the upper plane of the first and second electrodes 36 and 37. The grounding shields 41 are kept at ground potential, i.e. the same as the mirrored platforms 26, while one of the first and second electrodes is held at an activation voltage, e.g. 100 Volts.

In the disclosed open loop configuration, the angular position of the platforms 26 depend non-linearly on the voltage applied by the electrodes 36 (or 37), i.e. as the applied voltage is increased linearly, the incremental change in angular platform position is greater as the voltage increases. Accordingly, there is a maximum voltage, i.e. an angular platform position, at which the platform angular position becomes unstable and will uncontrollably tilt until hitting part of the lower structure, e.g. the electrode 36. This maximum voltage sets the range of angular motion that the platform 26 can travel. The instability in the platform's angular position is a result of the distance between the platform 26 and the electrode 36 (the hot electrode) decreasing more rapidly at the outer free ends of the platform 26 than at the inner sections, nearer the pivot axis θ_{y}. As a result, the force per unit length along the platform 26 increases more rapidly at the outer free ends of the platform 26 than the inner sections. To increase the platform's range of angular motion, the field strength, i.e. the force per unit area, that is sensed at the outer free ends of the platform 26 must be reduced. With reference to Figures 5 to 9, this is accomplished by providing the electrodes 36 and 37 with a two step configuration. Upper steps 36a and 37a are positioned proximate the inner end of the platform 26, while lower steps 36b and 37b are positioned under the outer free ends of the platform 26, thereby making the gap between the platforms 26 and the electrodes 36 and 37 greater at the outer free end than the inner end. The area of the lower steps 36b and 37b can also be made smaller, thereby reducing the force per unit area sensed by the outer free end of the platform 26.

Figure 9 illustrates C-shaped grounding shields 140, which include lateral portions 140a for partially surrounding the electrode 36.

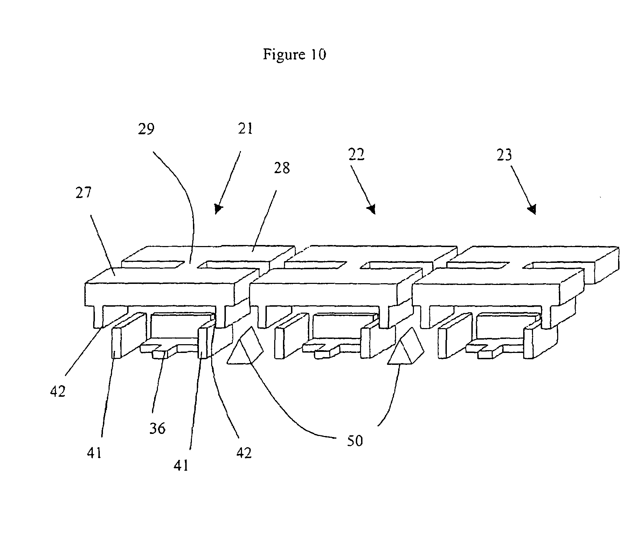

To further eliminate cross-talk between adjacent electrodes 36, additional platform shields 42 (Figures 10, 11 and 12) can be added to the underside of the planar sections 27 and 28, outside or inside of the electrode shields 41. Typically, in the rest position, the two different sets of shields 41 and 42 are offset from each other and do not overlap; however, as the platform 26 tilts the platform shields 42 begin to overlap the grounding shielding 41. The added protection provided by overlapping shielding is particularly advantageous, when the tilt angle of the platform 26 is proportional to the voltage applied to the electrode 36 (or 37), such as in open loop configurations. Accordingly, the greater the tilt angle, the greater the required voltage, and the greater the amount of potential cross-talk, but consequently the greater the amount of shielding provided by the overlapping ground and platform shields 41 and 42, respectively.

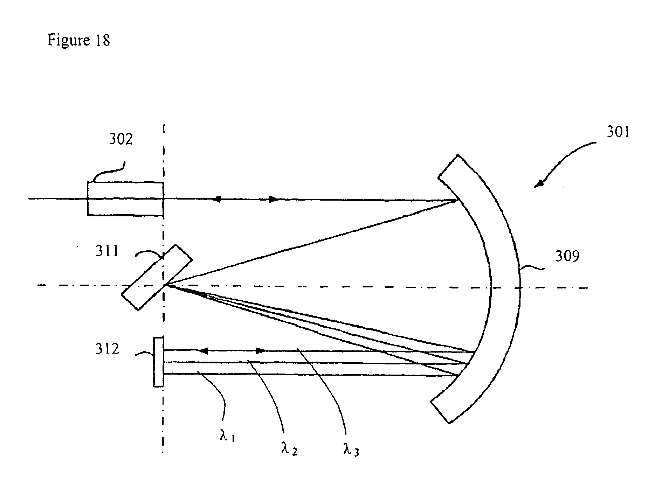

Since the MEMs mirror devices 21, 22 and 23 are for use in optical devices, i.e. wavelength blockers and multiple wavelength switches (see Figure 18), which include a grating for dispersing the light into spectral wavelength component channels, it is an important performance requirement that the spectral response has a high rejection of light between the selected wavelength channels. Unfortunately, in conventional MEMs devices, light passes between the mirrors and is reflected off the substrate back into the optical device, thereby leading to a deterioration in the isolation between the wavelength channels. Accordingly, the present invention provides back reflection cusps 50, defined by angled, curved or concave reflecting surfaces intersecting along a ridge, extending longitudinally below the gap between the platforms 26, for scattering any light passing between the mirrored platforms 26 in a direction substantially parallel to the surface of the platforms 26.

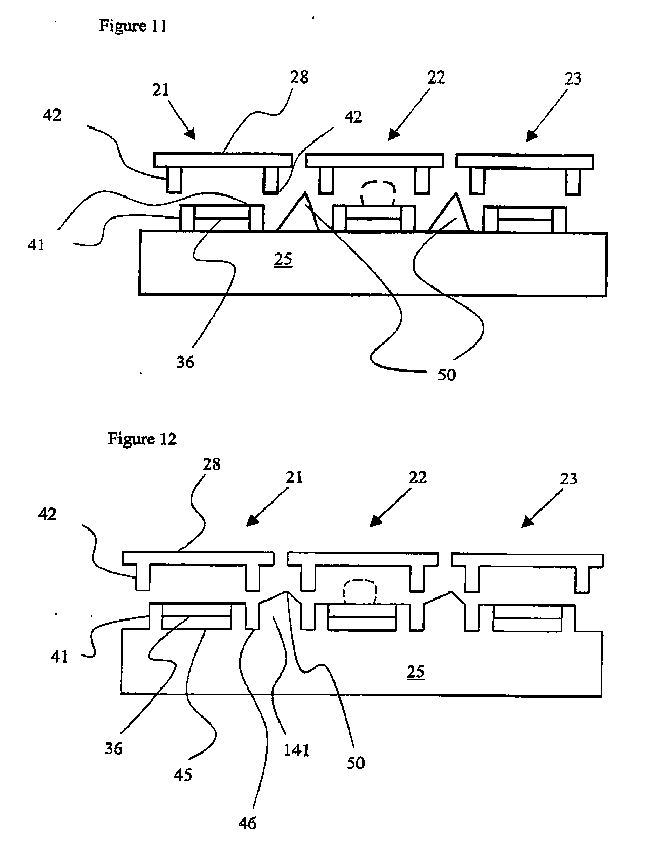

Figure 12 illustrates a preferred embodiment in which the platform shields 42 are etched on the underside of the platforms 26, and the ground shields 41 are etched on the upper surface of the substrate 25. Trenches 45 are also etched from the upper surface of the substrate 25 for receiving the electrodes 36 and 37, while trenches 46 are etched from the upper surface of the substrate 25 to ensure the platform shields 42 have a free range of motion. Back reflection cusps 50 are provided on an additional ground shield 141 disposed between the platform shields 42 of adjacent platforms 26. When the additional ground shield 141 is provided, the original ground shields 41 can be eliminated.

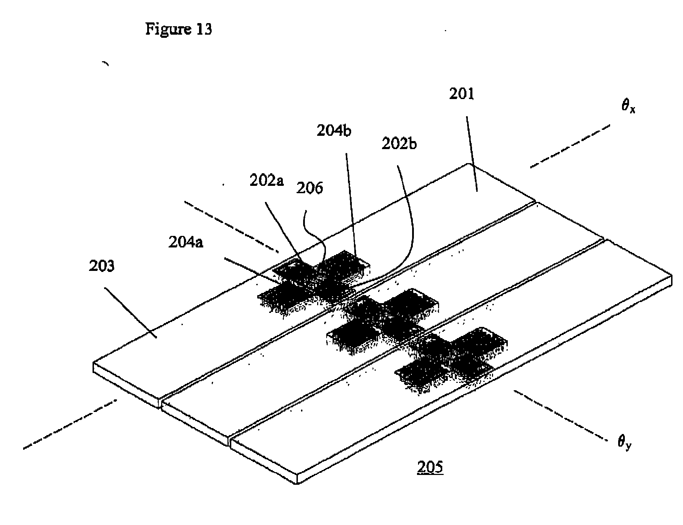

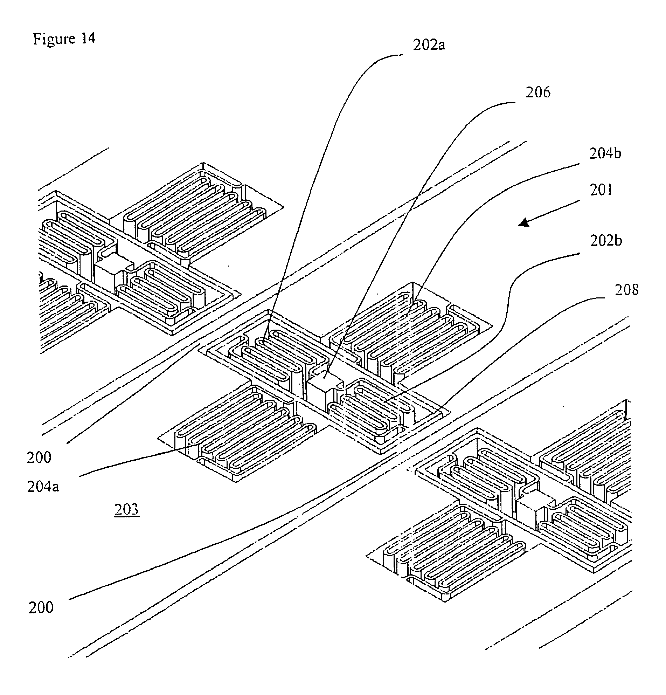

Figures 13 and 14 illustrate an array of internal gimbal ring MEMs mirror devices 201 utilizing a first pair of serpentine torsional hinges 202a and 202b for pivoting a rectangular platform 203 about a first axis of rotation θ_{y} and a second pair of serpentine torsional hinges 204a and 204b for rotating the platform 203 about a second axis of rotation θₓ above a base substrate 205. The first pair of serpentine torsional hinges 202a and 202b extend from a single anchor post 206, which extends upwardly from the base substrate 205 through the center of the platform 203, i.e. at the intersection of the minor and major axes thereof. Outer ends of the first pair of torsional serpentine torsional hinges 202a and 202b are connected to a rectangular gimbal ring 208, which surrounds the first pair of serpentine hinges 202a and 202b, at points along the minor axes (θₓ) of the platform 203. The second pair of serpentine torsional hinges 204a and 204b extend from opposite sides of the gimbal ring 208 into contact with the platform 203, at points along the major axis (θ_{y}) of the platform 203.

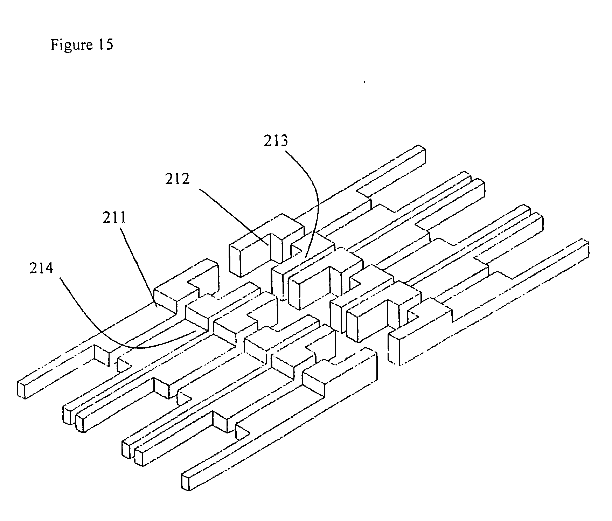

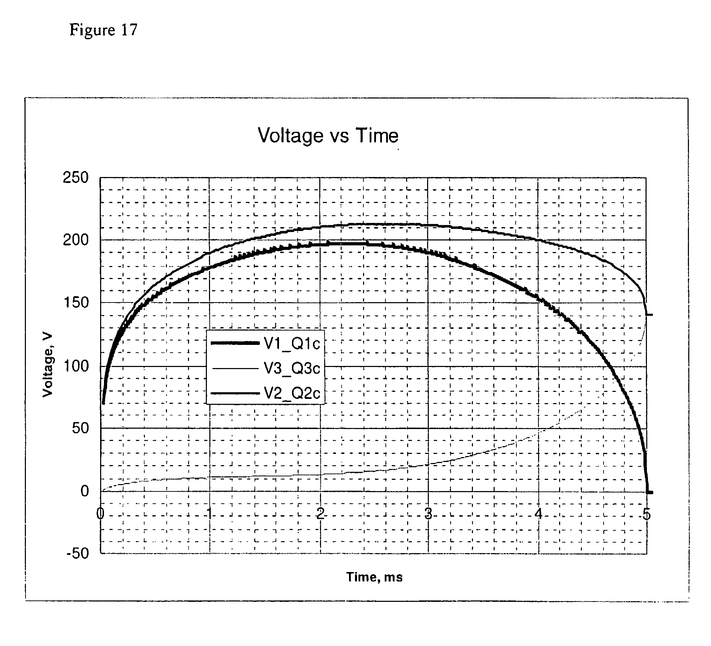

To provide a full range of motion for the platform 203, a set of four electrodes 211, 212, 213 and 214 are provided (See Fig. 15); however, for the present invention only the first, second and third electrodes 211, 212 and 213 are required to roll the mirrors out of alignment with any intermediate output ports and then back into alignment with a designated output port. Accordingly, first, second and third voltages can be established between the platform 203 and the first electrode 211, the second electrode 212 and the third electrode 213, respectively. Initially, the first and second electrodes 211 and 212 are activated to rotate the platform 203 about θₓ. Subsequently, the first voltage is gradually lowered to zero, while the third voltage is gradually increased until it is equivalent to the second voltage (See Fig 17). To minimize unwanted effected caused by ringing, i.e. vibration of the mirrors caused by an abrupt start or stop, the first, second and third voltages are increased gradually, as evidenced in Figure 17, which illustrates the voltages curves for the various electrodes (first, second and third) over the actuation time of the mirror device. Various mirror tilting patterns can be designed based on the desired characteristics, e.g. attenuation, of the light.

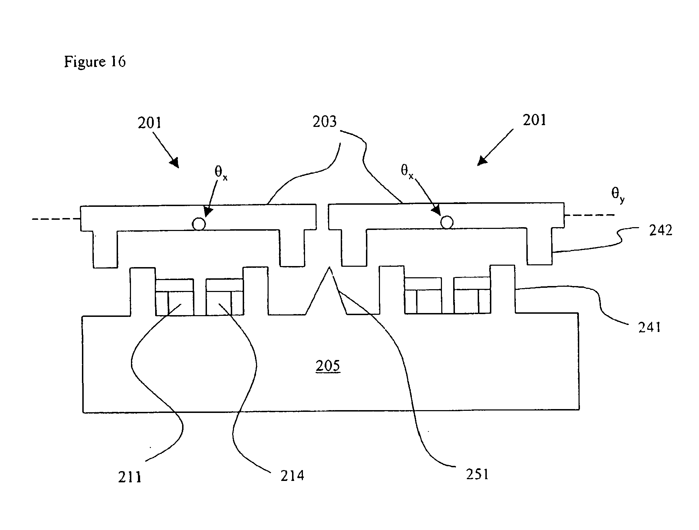

Figure 16 illustrates grounding shields 241 and platform shields 242, which minimize electrical cross-talk between the electrodes 211 to 214 of the internal gimbal ring MEMs mirror devices 201. Since the platforms 203 rotate about two axes, it is important to provide enough clearance between the grounding shields 241 and the platform shields 242 to prevent any contact therebetween during the full range of motion of the platform 203. A separate light reflecting cusp 251 is provided to reflect any light passing between the platforms 203 substantially parallel thereto, thereby preventing light from reflecting back between the mirrors and into the optics of the switch. Alternatively, the platform shields 242 could be omitted, whereby the cusp 251 would act as both shield and light reflector.

The "piano" MEMs mirror devices according to the present invention are particularly useful in a wavelength switch 301 illustrated in Figures 18, 19 and 20. In operation, a beam of light with a plurality of different wavelength channels is launched via an input/output assembly 302, which comprises a plurality of input/output ports, e.g. first, second, third and fourth input/output ports 303, 304, 305 and 306, respectively. The beam is directed to an element having optical power, such as concave mirror 309, which redirects the beam to a dispersive element 311, e.g. a Bragg grating. The dispersive element separates the beam into the distinct wavelength channels (λ₁, λ₂, λ₃), which are again directed to an element having optical power, e.g. the concave mirror 309. The concave mirror 309 redirects the various wavelength channels to an array of "piano" MEMs mirror devices 312 according to the present invention, which are independently controlled to direct the various wavelength channels back to whichever input/output port is desired. Wavelength channels designated for the same port are reflected back off the concave mirror 309 to the dispersive element 311 for recombination and redirection off the concave mirror 309 to the desired input/output port. The concave mirror 309 can be replaced by a single lens with other elements of the switch on either side thereof or by a pair of lenses with the dispersive element 311 therebetween.

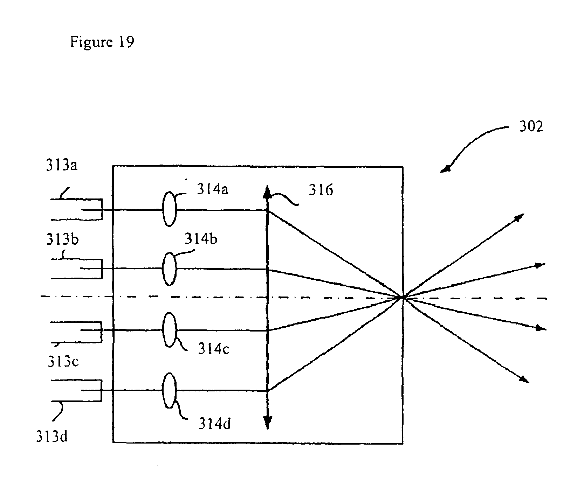

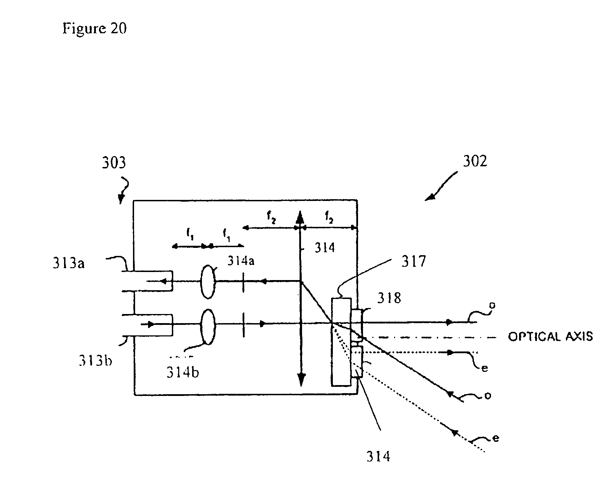

With particular reference to Figure 19, the input/output assembly 302 includes a plurality of input/output fibers 313a to 313d with a corresponding collimating lens 314a to 314d. A single lens 316 is used to convert a spatial offset between the input/output ports into an angular offset. Figure 20 illustrates a preferred embodiment of the input/output assembly, in which the unwanted effects of polarization diversity are eliminated by the use of a birefringent crystal 317 and a waveplate 318. For incoming beams, the lens 316 directs each beam through the birefringent crystal 317, which separates the beam into two orthogonally polarized sub-beams (o and e). The half waveplate 318 is positioned in the path of one of the sub-beams for rotating the polarization thereof by 90°, so that both of the sub-beams have the same polarization for transmission into the remainder of the switch. Alternatively, the waveplate 318 is a quarter waveplate and rotates one of the sub-beams by 45° in one direction, while another quarter waveplate 319 rotates the other sub-beam by 45° in the opposite direction, whereby both sub-beams have the same polarization. For outgoing light, the polarization of one (or both) of the similarly polarized sub-beams are rotated by the waveplate(s) 318 (and 319), so that the sub-beams become orthogonally polarized. The orthogonally polarized sub-beams are then recombined by the birefringent crystal 317 and output the appropriate input/output port. The micro-electro-mechanical devices according to the present invention are particularly well suited for use in switching devices with polarization diversity front ends, since they provide a pair of reflecting surfaces, i.e. one for each sub-beam.

## Claims

1. A micro-electro-mechanical device mounted on a substrate comprising:
a first pivoting member (26) pivotally mounted above the substrate (25);
a second pivoting member (26) pivotally mounted above the substrate (25) adjacent the first pivoting member (26), wherein each of the first and second pivoting members (26) includes first and second supporting regions (27, 28) at opposite ends;
a first electrode (36) positioned on the substrate (25) below the first supporting region (27) of the first pivoting member (26) for actuating the first pivoting member (26);
a second electrode (36) positioned on the substrate (25) below the first supporting region (27) of the second pivoting member (26) proximate the first electrode for actuating the second pivoting member (26);
a first shield (41) positioned between the first and second electrodes (36) for shielding the first pivoting member (26) from fringing electric fields from the second electrode (36), **characterized in that** the first and second pivoting members (26) are pivotable about a common first pivot axis (θy), and **in that** the first shield extends upwardly from the substrate (25) above an upper surface of the first electrode (36) and extends the full length of the first electrode (36) perpendicular to the first pivot axis (θy), wherein the first and second pivoting members (26) are positioned in close proximity with only an air gap between adjacent first supporting regions (27) and between adjacent second supporting regions (28).

2. The device according to claim 1, wherein the first shield (41) includes an angled, curved or concave upper surface for redirecting light passing between the first and second pivoting pivoting members (26).

3. The device according to claim 1 or 2, further comprising a second shield (42) extending downwardly from the first or second pivoting member (26), laterally offset from the first shield (41), whereby during movement of the first or second pivoting member (26) the first and second shields (41, 42) overlap.

4. The device according to claim 3, wherein said first shield (41) includes shielding positioned on opposite sides of the first and second electrodes (36); and wherein said second shield includes shielding extending from underneath of the first and second pivoting members (26) on opposite sides of the first and second electrodes (36), respectively.

5. The device according to any one of claims 1 to 4, further comprising:
a third electrode (213) positioned below the second supporting region of the first pivoting member:
a fourth electrode positioned below the second supporting region of the second pivoting member; and
a further shield extending upwardly from the substrate including shielding on opposite sides of the third and fourth electrode.

6. The device according to one of the preceding claims, wherein each of the first and second pivoting members includes:
a brace (29) extending between the first and second supporting regions (26);
a first torsional hinge (202a, 202b) rotatable about the first pivot axis extending between the brace (29) and an anchor post (30) extending from the substrate (25).

7. The device according to claim 6, wherein each of the first and second pivoting members further comprise:
a gimblal ring (208) between the first and second supporting regions surrounding the first torsional hinge, opposite ends of the first torsional hinge being fixed to opposite sides of the gimbal ring;
a second torsional hinge (204a, 204b) rotatable about a second pivot axis (θx) perpendicular to the first pivot axis (θy), the second torsional hinge comprising first and second arms extending from opposite sides of the gimbal ring to the first and second supporting regions, respectively;
a fifth electrode positioned on the substrate for pivoting of the first pivoting member about the second pivot axis; and
a sixth electrode positioned on the substrate for pivoting of the second pivoting member about the second pivot axis.

8. The device according to one of the preceding claims, further comprising back reflection cusps (50) extending below the air gaps between adjacent first supporting regions (27) and between adjacent second supporting regions (28) said cusps (50) having an angled, curved or concave upper surface for redirecting light passing between the first and second pivoting members to prevent it from being reflected back through the air gaps.

9. The device according to any one of claims 1 to 8, wherein the first electrode (36) includes an upper step positioned underneath an inner end of the first supporting region, and a lower step positioned underneath an outer free end of the first supporting region.

## Patentansprüche

1. Eine auf einem Substrat montierte Mikro-Elektromechanik-Vorrichtung, welche aufweist:
ein erstes drehbares Bauelement (26), welches drehbar über dem Substrat (25) montiert ist;
ein zweites drehbares Bauelement (26), welches drehbar über dem Substrat (25) neben dem ersten drehbaren Bauelement (26) montiert ist, wobei jedes der ersten und zweiten drehbaren Bauelemente (26) an entgegen gesetzten Enden erste und zweite Stützbereiche (27, 28) aufweist;
eine erste Elektrode (36), welche auf dem Substrat (25) unter dem ersten Stützbereich (27) des ersten drehbaren Bauelementes (26) zum Betätigen des ersten drehbaren Bauelementes (26) angeordnet ist;
eine zweite Elektrode (36), welche auf dem Substrat (25) unter dem ersten Stützbereich (27) des zweiten drehbaren Bauelementes (26) neben der ersten Elektrode zum Betätigen des zweiten drehbaren Bauelementes (26) angeordnet ist;
eine erste Abschirmung (41), welche zwischen den ersten und zweiten Elektroden (36) angeordnet ist, um das erste drehbare Bauelement (26) von streuenden elektrischen Feldern von der zweiten Elektrode (36) abzuschirmen, **dadurch gekennzeichnet, dass** die ersten und die zweiten drehbaren Bauelemente (26) um eine gemeinsame erste Drehachse (θy) drehbar sind, und dass die erste Abschirmung sich vom Substrat (25) über einer oberen Oberfläche der ersten Elektrode (36) gegen oben erstreckt und über die ganze Länge der ersten Elektrode (36) senkrecht zur ersten Drehachse (θy) verläuft, wobei die ersten und zweiten drehbaren Bauelemente (26) nahe beieinander mit nur einem Luftspalt zwischen nebeneinander liegenden ersten Stützbereichen (27) und zwischen nebeneinander liegenden zweiten Stützbereichen (28) angeordnet sind.

2. Die Vorrichtung gemäss Anspruch 1, wobei die erste Abschirmung (41) eine abgewinkelte, gekrümmte oder konkave obere Oberfläche aufweist, um das zwischen den ersten und zweiten drehbaren Bauelementen (26) durchkommende Licht umzulenken.

3. Die Vorrichtung gemäss Anspruch 1 oder 2, des Weiteren aufweisend eine zweite Abschirmung (42), welche sich vom ersten oder zweiten drehbaren Bauelement (26) aus seitlich versetzt von der ersten Abschirmung (41) nach unten erstreckt, wobei während einer Bewegung des ersten oder zweiten drehbaren Bauelementes (26) die erste und zweite Abschirmung (41, 42) sich überlappen.

4. Die Vorrichtung gemäss Anspruch 3, wobei die erste Abschirmung (41) Abschirmungsmittel aufweist, welche auf gegenüber liegenden Seiten der ersten und zweiten Elektroden (36) angeordnet sind, und wobei die zweite Abschirmung Abschirmungsmittel aufweist, welche sich von unterhalb der ersten und zweiten drehbaren Bauelemente (26) jeweils auf gegenüber liegenden Seiten der ersten und zweiten Elektroden (36) erstrecken.

5. Die Vorrichtung gemäss einem der Ansprüche 1 bis 4, welche des Weiteren aufweist:
eine dritte Elektrode (213), welche unterhalb des zweiten Stützbereichs des zweiten drehbaren Bauelementes angeordnet ist;
eine vierte Elektrode, welche unterhalb dem zweiten Stützbereich des zweiten drehbaren Bauelementes angeordnet ist; und
eine weitere Abschirmung, welche sich vom Substrat aus nach oben erstreckt, und welche Abschirmungsmittel auf gegenüber liegenden Seiten der dritten und vierten Elektrode aufweist.

6. Die Vorrichtung gemäss einem der vorhergehenden Ansprüche, wobei jedes der ersten und zweiten drehbaren Bauelemente aufweist:
eine Verstrebung (29), welche sich zwischen den ersten und zweiten Stützbereichen (26) erstreckt;
ein erstes Drehscharnier (202a, 202b), welches um die erste Drehachse drehbar ist, die zwischen der Verstrebung (29) und einem aus dem Substrat (25) heraus ragenden Ankerpfosten (30) verläuft.

7. Die Vorrichtung gemäss Anspruch 6, wobei jede der ersten und zweiten drehbaren Bauelemente des Weiteren aufweist:
einen Kardanring (208) zwischen den ersten und zweiten Stützbereichen, welcher um das erste Drehscharnier herum angeordnet ist, wobei gegenüber liegende Enden des ersten Drehscharniers an gegenüber liegenden Seiten des Kardanringes befestigt sind;
ein zweites Drehscharnier (204a, 204b), welches um eine zweite Drehachse (θx) senkrecht zur ersten Drehachse (θy) drehbar ist, wobei das zweite Drehscharnier erste und zweite Arme aufweist, welche sich von gegenüber liegenden Seiten des Kardanringes jeweils zu den ersten und zweiten Stützbereichen erstrecken;
eine fünfte Elektrode, welche auf dem Substrat angeordnet ist, um das erste drehbare Bauelement um die zweite Drehachse zu drehen; und
eine sechste Elektrode, welche auf dem Substrat angeordnet ist, um das zweite drehbare Bauelement um die zweite Drehachse zu drehen.

8. Die Vorrichtung gemäss einem der vorhergehenden Ansprüche, des Weiteren aufweisend rückreflektierende Umkehrpunkte (50), welche sich unterhalb der Luftspalte zwischen nebeneinander liegenden ersten Stützbereichen (27) und zwischen nebeneinander liegenden zweiten Stützbereichen (28) erstrecken, wobei diese Umkehrpunkte eine abgewinkelte, gekrümmte oder konkave obere Oberfläche aufweisen, um Licht umzulenken, das zwischen den ersten und zweiten drehbaren Bauelementen verläuft, um zu verhindern, dass dieses durch die Luftspalte hindurch zurück reflektiert wird.

9. Die Vorrichtung gemäss einem der Ansprüche 1 bis 8, wobei die erste Elektrode (36) eine obere Stufe aufweist, welche unterhalb eines inneren Endes des ersten Stützbereiches angeordnet ist, und eine untere Stufe, welche unterhalb eines äusseren freien Endes des ersten Stützbereiches angeordnet ist.

## Revendications

1. Dispositif micro-électromécanique monté sur un substrat et comprenant :
un premier élément pivotant (26) monté à pivotement au-dessus du substrat (25),
un deuxième élément pivotant (26) monté à pivotement au-dessus du substrat (25) en position adjacente au premier élément pivotant (26), le premier et le deuxième élément pivotant (26) comprenant tous deux une première et une deuxième zone de support (27, 28) situées à des extrémités opposées,
une première électrode (36) placée sur le substrat (25) en dessous de la première zone de support (27) du premier élément pivotant (26) pour actionner le premier élément pivotant (26),
une deuxième électrode (36) placée sur le substrat (25) en dessous de la première zone de support (27) du deuxième élément pivotant (26) à proximité de la première électrode, pour actionner le deuxième élément pivotant (26),
un premier blindage (41) placé entre la première et la deuxième électrode (36) pour blinder le premier élément pivotant (26) vis-à-vis des champs électriques de bord provenant de la deuxième électrode (36),
**caractérisé en ce que**
le premier et le deuxième élément pivotant (26) peuvent pivoter autour d'un premier axe commun de pivotement (θy) et
**en ce que** le premier écran déborde du substrat (25) vers le haut, au-dessus de la surface supérieure de la première électrode (36) et s'étend sur toute la longueur de la première électrode (36) perpendiculairement au premier axe de pivotement (θy),
le premier et le deuxième élément pivotant (26) étant disposés à proximité étroite avec seul un entrefer entre les premières zones de support (27) adjacentes et entre les deuxièmes zones de support (28) adjacentes.

2. Dispositif selon la revendication 1, dans lequel le premier écran (41) présente une surface supérieure coudée, incurvée ou concave qui renvoie la lumière qui passe entre le premier et le deuxième élément pivotant (26).

3. Dispositif selon les revendications 1 ou 2, comprenant en outre un deuxième écran (42) qui déborde du premier ou du deuxième élément pivotant (26) vers le bas en étant décalé latéralement par rapport au premier écran (41), le premier et le deuxième écran (41, 42) se superposant pendant le déplacement du premier ou du deuxième élément pivotant (26).

4. Dispositif selon la revendication 3, dans lequel ledit premier blindage (41) comprend un blindage disposé sur les côtés opposés de la première et de la deuxième électrode (36) et dans lequel ledit deuxième blindage comprend un blindage qui déborde du dessous du premier et du deuxième élément pivotant (26) sur des côtés opposés respectifs de la première et de la deuxième électrode (36).

5. Dispositif selon l'une quelconque des revendications 1 à 4, comprenant en outre :
une troisième électrode (213) disposée en dessous de la deuxième zone de support du premier élément pivotant,
une quatrième électrode disposée en dessous de la deuxième zone de support du deuxième élément pivotant et
un autre blindage qui déborde du substrat vers le haut et comprenant un blindage situé sur les côtés opposés de la troisième et de la quatrième électrode.

6. Dispositif selon l'une quelconque des revendications précédentes, dans lequel le premier et le deuxième élément pivotant comprennent :
une entretoise (29) qui s'étend entre la première et la deuxième zone de support (26),
une première charnière de torsion (202a, 202b) apte à tourner autour du premier axe de pivotement et s'étendant entre l'entretoise (29) et une colonne d'ancrage (30) qui déborde du substrat (25).

7. Dispositif selon la revendication 6, dans lequel le premier et le deuxième élément pivotant comprennent en outre tous deux :
une bague de cardan (208) située entre la première et la deuxième zone de support et entourant la première charnière de torsion, les extrémités opposées de la première charnière de torsion étant fixées sur des côtés opposés de la bague de cardan,
une deuxième charnière de torsion (204a, 204b) apte à tourner autour d'un deuxième axe de pivotement (θx) perpendiculaire au premier axe de pivotement (θy), la deuxième charnière de torsion comprenant un premier et un deuxième bras qui débordent de côtés opposés de la bague de cardan en direction respectivement de la première et de la deuxième zone de support,
une cinquième électrode disposée sur le substrat et qui fait pivoter le deuxième élément pivotant autour du deuxième axe de pivotement et
une sixième électrode disposée sur le substrat et qui fait pivoter le deuxième élément de pivotement autour du deuxième axe de pivotement.

8. Dispositif selon l'une des revendications précédentes, comprenant en outre des cornes (50) rétroréfléchissantes qui s'étendent en dessous des entrefers situés entre les premières zones de support (27) adjacentes et entre les deuxièmes zones de support (28) adjacentes, lesdites cornes (50) présentant une surface supérieure coudée, incurvée ou concave qui renvoie la lumière qui passe entre le premier et le deuxième élément de pivotement pour empêcher qu'elle soit retroréfléchie à travers les entrefers.

9. Dispositif selon l'une quelconque des revendications 1 à 8, dans lequel la première électrode (36) comprend un gradin supérieur placé en dessous de l'extrémité intérieure de la première zone de support et un gradin inférieur disposé en dessous de l'extrémité extérieure libre de la première zone de support.
